(19) Europäisches Patentamt
European Patent Office
Office européen des brevets

(11) EP 0 778 859 B1

(12) **EUROPÄISCHE PATENTSCHRIFT**

(45) Veröffentlichungstag und Bekanntmachung des Hinweises auf die Patenterteilung:
**18.11.1998 Patentblatt 1998/47**

(51) Int Cl.⁶: **C08J 7/04**, C09D 183/04
// C08L69:00

(21) Anmeldenummer: **95931172.1**

(22) Anmeldetag: **21.08.1995**

(86) Internationale Anmeldenummer:
**PCT/EP95/03316**

(87) Internationale Veröffentlichungsnummer:
**WO 96/07692 (14.03.1996 Gazette 1996/12)**

# (54) HERSTELLUNG KRATZFEST AUSGERÜSTETER POLYCARBONATFORMTEILE

PRODUCTION OF SCRATCH-RESISTANT POLYCARBONATE MOLDINGS

FABRICATION DE PIECES MOULEES EN POLYCARBONATE REV TUES DE MANIERE A RESISTER AU RAYAGE

(84) Benannte Vertragsstaaten:
**BE DE ES FR GB IT NL SE**

(30) Priorität: **02.09.1994 DE 4431216**

(43) Veröffentlichungstag der Anmeldung:
**18.06.1997 Patentblatt 1997/25**

(73) Patentinhaber: **BAYER AG**
**51368 Leverkusen (DE)**

(72) Erfinder:
- **BIER, Peter**
  **D-47800 Krefeld (DE)**
- **FREITAG, Dieter**
  **D-47802 Krefeld (DE)**
- **SCHOTTNER, Gerhard**
  **D-91560 Heilsbronn (DE)**

(56) Entgegenhaltungen:
**EP-A- 0 358 011** **EP-A- 0 359 953**

- **DATABASE WPI Week 8050, Derwent Publications Ltd., London, GB; AN 80-88815C & JP,A,55 116 731 (TORAY IND INC) 9. September 1980**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 778 859 B1

**Beschreibung**

Formteile aus aromatischen Polycarbonaten zeichnen sich durch Transparenz, hohe Schlagfähigkeit, hohe Wärmeformbeständigkeit und Dimensionsstabilität aus. Oft stört jedoch ihre Kratzempfindlichkeit. Um diese zu beheben, können die Formteile vorher mit einer Kratzfestschicht versehen werden. Bisher verwendete Kratzfestbeschichtungen bzw. Beschichtungsverfahren sind insbesondere hinsichtlich Kratzbeständigkeit und Haftung der Schicht auf dem Substrat bei möglichst geringer Schichtdicke bzw. Aushärtungszeit der Kratzfestschichten noch nicht vollständig befriedigend.

Die Erfindung betrifft ein Verfahren zur Beschichtung von speziellen hochwärmeformbeständigen Polycarbonaten mit speziellen Siloxan-haltigen Lacken, wobei die resultierende Beschichtung eine besonders hohe Kratzbeständigkeit und gute Haftung auf dem Substrat aufweist, die Beschichtung in kurzer Zeit härtet und besondere Transparenz aufweist.

Gegenstand der Erfindung ist ein Verfahren zur Beschichtung von Polycarbonatformteilen, das dadurch gekennzeichnet ist, daß man auf die Oberfläche eines Formkörpers aus einem Polycarbonat auf Basis eines Diphenols der Formel (Ia)

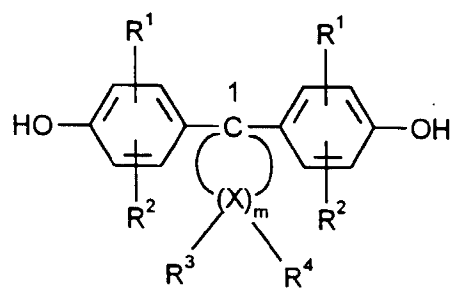

(Ia)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,. |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten,

eine Masse (b) in einer Dicke von 2 bis 200 µm. aufträgt, die durch hydrolytische Polykondensation einer Aluminiumverbindung eines organofunktionellen Silans und einer Oxidkomponente erhalten worden ist, und die Masse bei einer Temperatur von 135 bis 180°C härtet.

Ein weiterer Gegenstand der Erfindung sind die so erhaltenen kratzfest ausgerüsteten Polycarbonatformkörper.

Die Polycarbonate A sind hochmolekulare thermoplastische aromatische Polycarbonate mit Molekulargewichten $\overline{M}w$ (Gewichtsmittel) von mindestens 10.000, vorzugsweise von 20.000 bis 300.000, die bifunktionelle Carbonatstruktureinheiten der Formel (I) enthalten

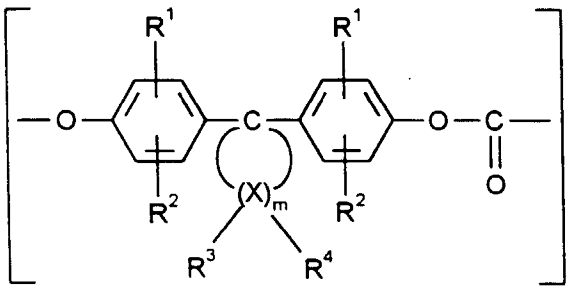

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten.

Diese Polycarbonate und die zugrundeliegenden Dihydroxydiphenylcycloalkane der Formel (Ia) und die Herstellung beider Produkte sind in der EP 359953A ausführlich beschrieben. Ausgangsprodukte für die Polycarbonate A sind die Dihydroxydiphenylcycloalkane der Formel (Ia). In dieser Formel ist der bevorzugte Alkylrest Methyl; die X-Atome in α-Stellung zu dem Diphenyl-substituierten C-Atom (C-1) sind bevorzugt nicht dialkylsubstituiert, dagegen ist die Alkyldisubstitution in β-Stellung zu C-1 bevorzugt.

Bevorzugt sind Dihydroxydiphenylcycloalkane mit 5- und 6-Ring-C-Atomen im cycloaliphatischen Rest (m = 4 oder 5 in Formel Ia), beispielsweise die Diphenole der Formeln (Ib) bis (Id).

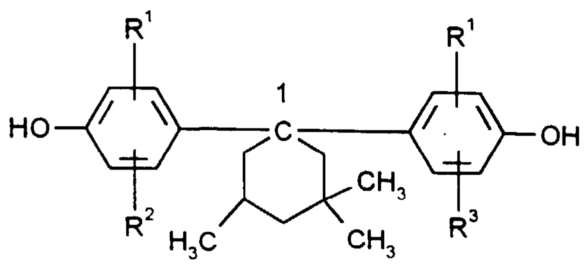

(Ib),

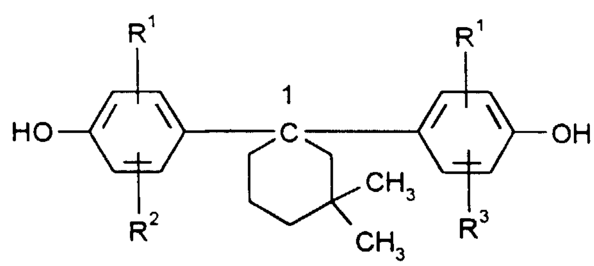

(Ic),

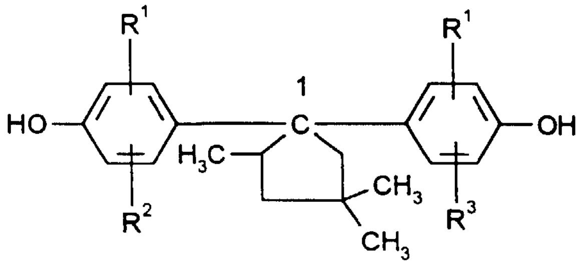

(Id),

wobei das 1,1-Bis-(4-hydroxyphenyl)-3,3,5-trimethylcyclohexan (Formel Ib mit $R^1$ und $R^2$ gleich H) besonders bevorzugt ist.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

$$HO\text{-}Z\text{-}OH \qquad (Ie),$$

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Besonders bevorzugte Diphenole der Formel (Ie) sind beispielsweise:

2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Sie können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), soll zwischen 100 Mol-% (Ia) zu 0 Mol-% (Ie) und 2 Mol-% (Ia) zu 98 Mol-% (Ie), vorzugsweise zwischen 100 Mol-% (Ia) zu 0 Mol-% (Ie) und 5 Mol-% (Ia) zu 95 Mol-% (Ie) und insbesondere zwischen 100 Mol-% (Ia) zu 0 Mol-% (Ie) und 10 Mol-% (Ia) zu 90 Mol-% (Ie) und ganz besonders bevorzugt 100 Mol-% (Ia) zu 0 Mol-% (Ie) und 20 Mol-% (Ia) zu 80 Mol-% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri(4-hydroxyphenyl)-ethan, Tri-(4-hydroxyphenyl)-phenylmethan, 2,2-Bis[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxylphenyl)-propan, Hexa-[4-hydroxyphenyl-isopropyl)-phenyl]-orthoterephthalsäureester, Tetra-(4-hydroxyphenyl)-methan, Tetra-[4-(4-hydroxyphenyl-isopropyl)-phenoxy]-methan und 1,4-Bis-[4',4'-dihydroxxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

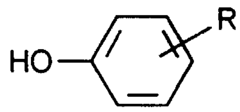

(If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Für nähere Einzelheiten sei auf EP 359953A verwiesen.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Durch den Einbau der Diphenole der Formel (Ia) besitzen die Polycarbonate hohe Wärmeformbeständigkeit.

Die besonders bevorzugten Polycarbonate A sind solche, die Einheiten der Formel (Ig) enthalten

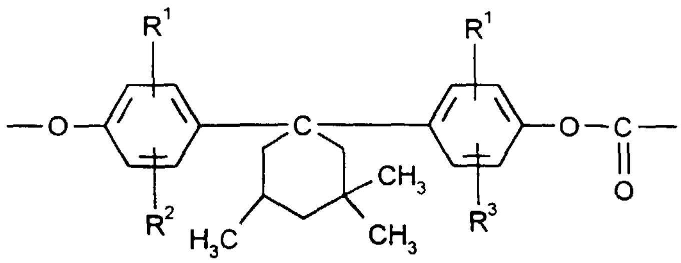

(Ig),

worin $R^1$ und $R^2$ die für Formel (I) genannte Bedeutung haben, besonders bevorzugt aber Wasserstoff sind.

Die Polycarbonate besitzen außer hoher Wärmeformbeständigkeit eine gute UV-Stabilität und ein gutes Fließverhalten in der Schmelze.

Durch die beliebige Kombination mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesonder in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Die Kratzfestbeschichtungen B erhält man durch hydrolytische Vorkondensation, gegebenenfalls in Anwesenheit eines Kondensationskatalysators von

a) mindestens einem organofunktionellen Silan der Formel (I)

$$R'_m\, Si\, X_{(4-m)} \qquad (I)$$

in der die Gruppen X, die gleich oder verschieden sein können, Wasserstoff, Halogen, Alkoxy, Acyloxy, Alkylcarbonyl, Alkoxycarbonyl oder $-NR''_2$ (R" = H und/oder Alkyl) bedeuten und die Reste R', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat, und/oder einem davon abgeleiteten Oligomeren, in einer Menge von 25 bis 95 Mol-%, bezogen auf die Gesamtmolzahl der (monomeren) Ausgangskomponenten;

b) mindestens einer Aluminiumverbindung der Summenformel (II)

$$Al\,R_3 \qquad (II)$$

in welcher die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können, und/oder einem davon abgeleiteten Oligomeren und/oder einem . gegebenenfalls komplexierten Aluminiumsalz einer anorganischen oder organischen Säure, in einer Menge von 5 bis 75 Mol-%, bezogen auf die Gesamtmolzahl der (monomeren) Ausgangskomponenten; und gegebenenfalls

c) einem oder mehreren im Reaktionsmedium löslichen, schwerflüchtigen Oxiden eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten; mit einer geringeren Wassermenge als der zur vollständigen Hydrolyse der hydrolysierbaren Gruppen stöchiometrisch erforderlichen Menge, entweder

(i) durch Zugabe von weiterem Wasser, das ganz oder teilweise die Hydrolyse der verbliebenen hydrolysierbaren Gruppen bewirkt, sowie gegebenenfalls eines Kondensationskatalysators, weiterkondensiert und daraufhin auf das Substrat aufbringt bzw. einem Formgebungsprozeß unterwirft; und/oder

(ii) auf das Substrat aufbringt bzw. einem Formgebungsprozeß unterwirft, und in einer wasserdampfhaltigen Atmosphäre weiterkondensiert.

Für die vorstehend angegebenen allgemeinen Formeln gilt: Alkylreste sind z.B. geradkettige, verzeigte oder cyclische Reste mit 1 bis 20, vorzugsweise 1 bis 10, Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl, Dodecyl, Octadecyl und Cyclohexyl.

Alkenylreste und Alkinylreste sind z.B. geradkettige, verzweigte oder cyclische Reste mit 2 bis 20, vorzugsweise 2 bis 10 Kohlenstoffatomen und mindestens einer C-C-Doppel- bzw. Dreifachbindung und insbesondere niedere Alkenylreste und Alkinylreste wie Vinyl, Allyl, 2-Butenyl, Ethinyl und Propargyl.

Die Alkoxy-, Acyloxy-, Alkylamino-, Dialkylamino-, Alkylcarbonyl-, Alkoxycarbonyl-, Alkylaryl-, Arylalkyl-, Alkenylaryl-, Arylalkenyl-, Alkinylaryl-, Arylalkinyl- und die substituierten Aminoreste oder Amidreste leiten sich z.B. von den vorstehend genannten Alkyl-, Alkenyl- und Alkinylresten ab. Spezielle Beispiele sind Methoxy, Ethoxy, n- und i-Propoxy, n-, sek.- und tert.-Butoxy, Isobutoxy, β-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl, Ethoxycarbonyl, Benzyl, 2-Phenylethyl, Tolyl und Styryl. Bevorzugte Arylreste sind Phenyl, Hydroxyphenyl, Biphenyl und Naphthyl, wobei Phenyl besonders bevorzugt wird.

Die genannten Reste können gegebenenfalls einen oder mehrere Substituenten tragen, z.B. Halogenatome, niedere Alkyl- oder Alkoxyreste und Nitrogruppen. Hierbei werden Halogenatome (z.B. F, Cl, Br), insbesondere Fluoratome, die dem Endprodukt hydrophobe Eigenschaften und insbesondere gute Schwitzwasserbeständigkeit verleihen können, bevorzugt. Als besonders vorteilhaft haben sich in diesem Zusammenhang halogenierte, insbesondere fluorierte Silane erwiesen.

Unter den Halogenen, die direkt an das Zentralatom gebunden sind, sind Fluor, Chlor und Brom bevorzugt. Besonders bevorzugt ist Chlor.

Erfindungsgemäß verwendbare Aluminiumverbindugnen sind insbesondere solche mit der Summenformel

$$Al\,R_3 \qquad (II)$$

in welcher die Reste R, die gleich oder verschieden sein können, Halogen, insbesondere Cl und/oder Br, Alkyl, Alkoxy, Acyloxy oder Hydroxy bedeuten, wobei die soeben genannten Gruppen ganz oder teilweise durch Chelatliganden ersetzt sein können. Die Anwesenheit eines Chelatliganden wird insbesondere dann bevorzugt, wenn zwei oder drei gleiche Reste R zu einer gegenüber $H_2O$ sehr reaktiven Verbindung $AlR_3$ führen und dadurch die Kontrolle der Hydrolysereaktion und die Vermeidung von Ausfällungen erschweren würden. Beispiele für solche Reste R sind Halogen und Alkyl. Auch für R = OH ist die Verwendung eines Chelatliganden vorteilhaft. Gängige Chelatliganden sind z.B.

Acetylaceton und Acetessigsäureethylester.

Auch Salze anorganischer und organischer Säuren, wie z.B. $HNO_3$, $H_2SO_4$, $H_3PO_4$ und Ameisensäure, Essigsäure, Propionsäure und Oxalsäure können erfindungsgemäß Verwendung finden. In diesem Fall empfiehlt sich ebenfalls die Komplexierung mit einem Chelatliganden.

Konkrete Beispiele für erfindungsgemäß verwendbare Aluminiumverbindungen sind $Al(OCH_3)_3$, $Al(OC_2H_5)_3$, $Al(O\text{-}n\text{-}C_3H_7)_3$, $Al(O\text{-}i\text{-}C_3H_7)_3$, $Al(OC_4H_9)$, $Al(O\text{-}i\text{-}C_4H_9)_3$, $Al(O\text{-}sek.\text{-}C_4H_9)_3$, $AlCl_3$, $AlCl(OH)_2$, Aluminiumformiat, Aluminiumacetat und Aluminiumoxalat sowie die entsprechenden (teilweise) chelatisierten Verbindungen, wie z.B. die Acetylacetonate. Bei Raumtemperatur flüssige Verbindungen, wie z.B. $Al(O\text{-}sek.\text{-}C_4H_9)_3$ und $Al(O\text{-}i\text{-}C_3H_7)_3$ werden besonders bevorzugt.

Bei den organofunktionellen Silanen kann die Gruppe R' gegebenenfalls durch Sauerstoff- oder Schwefelatome oder -NR"-Gruppen unterbrochen sein.

Spezielle Beispiele für geeignete organofunktionelle Silane sind:

$CH_3\text{-}Si\text{-}Cl_3$, $CH_3\text{-}Si\text{-}(OC_2H_5)_3$, $C_2H_5\text{-}Si\text{-}Cl_3$, $C_2H_5\text{-}Si\text{-}(OC_2H_5)_3$, $CH_2{=}CH\text{-}Si\text{-}(OC_2H_5)_3$, $CH_2{=}CH\text{-}Si\text{-}(OC_2H_4OCH_3)_3$, $CH_2{=}CH\text{-}Si\text{-}(OOCCH_3)_3$, $CH_2{=}CH\text{-}SiCl_3$, $CH_2{=}CH\text{-}CH_2\text{-}Si\text{-}(OCH_3)_3$, $CH_2{=}CH\text{-}CH_2\text{-}Si\text{-}(OC_2H_5)_3$, $C_3H_7\text{-}Si\text{-}(OCH_3)_3$, $C_6H_5\text{-}Si\text{-}(OCH_3)_3$, $C_6H_5\text{-}Si\text{-}(OC_2H_5)_3$, $(CH_3)_2\text{-}Si\text{-}Cl_2$, $(CH_3)_2\text{-}Si\text{-}(OC_2H_5)_2$, $(C_2H_5)_2\text{-}Si\text{-}(OC_2H_5)_2$, $(CH_3)(CH_2{=}CH)\text{-}Si\text{-}Cl_2$, $(CH_3)_3\text{-}Si\text{-}Cl$, $(C_2H_5)_3\text{-}Si\text{-}Cl$, $(CH_3)_2\text{-}Si\text{-}(OCH_3)_2$, $(CH_3)_2\text{-}Si\text{-}(OC_2H_5)_2$, $(C_6H_5)_2\text{-}Si\text{-}Cl_2$, $(C_6H_5)_2\text{-}Si\text{-}(OCH_3)_2$, $(C_6H_5)_2\text{-}Si\text{-}(OC_2H_5)_2$, $(t\text{-}C_4H_9)$, $(CH_3)_2\text{-}Si\text{-}Cl$, $(CH_3)_2\text{-}(CH_2{=}CH\text{-}CH_2)\text{-}Si\text{-}Cl$, $(CH_3O)_3\text{-}Si\text{-}C_3H_6\text{-}Cl$,

$(C_2H_5O)_3\text{-}Si\text{-}C_3H_6\text{-}CN$, 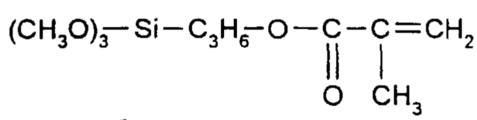 ,

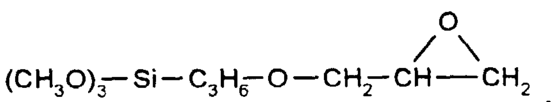 , $(CH_3O)_3\text{-}Si\text{-}C_3H_6\text{-}NH_2$,

$(C_2H_5O)_3\text{-}Si\text{-}C_3H_6\text{-}NH_2$, $(C_2H_5O)_2(CH_3)\text{-}Si\text{-}C_3H_6\text{-}NH_2$,

$H_2N\text{-}CH_2\text{-}CH_2\text{-}NH\text{-}C_3H_6\text{-}Si\text{-}(OCH_3)_3$,

$H_2N\text{-}CH_2\text{-}CH_2\text{-}NH\text{-}CH_2\text{-}CH_2\text{-}C_3H_6\text{-}Si\text{-}(OCH_3)_3$, 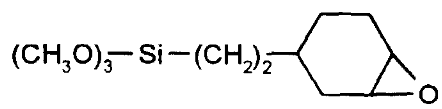

Diese Silane sind zum Teil Handelsprodukte oder sie lassen sich nach bekannten Methoden herstellen; vgl. W Noll, "Chemie und Technologie der Silicone", Verlag Chemie GmbH, Weinheim/Bergstraße (1968).

Vorzugsweise ist in den Silanen der allgemeinen Formel (I) der Index m = 1. Bei höheren Werten von m besteht die Gefahr, daß die Härte des Materials abnimmt, falls zuviel derartiges Silan eingesetzt wird. Dementsprechend werden im allgemeinen die besten Ergebnisse erzielt, wenn wenigstens 60 Mol-%, insbesondere wenigstens 75 Mol-% und am meisten bevorzugt wenigstens 90 Mol-% in bezug auf die Gesamtmolzahl an verwendeten Silanen der Formel (I) Silane sind, bei denen m in der Formel (I) gleich 1 ist. Die Menge der Silanen der Formel (I), worin m = 3 ist, beträgt vorzugsweise nicht mehr als 5 Mol-% der verwendeten Silane. Besonders bevorzugte Silane der vorliegenden Erfindung sind γ-Glycidyloxypropyltrialkoxysilane, γ-Aminopropyltrialkoxysilane, Propyltrialkoxysilane, Phenyltrialkoxysilane, Vinyltrialkoxysilane und Mischungen davon. In diesen Verbindungen bedeutet "Alkoxy" vorzugsweise Methoxy oder Ethoxy.

Anstelle der monomeren Ausgangssilane können gegebenenfalls auch vorkondensierte, im Reaktionsmedium lösliche Oligomere dieser Silane eingesetzt werden; d.h. geradkettige oder cyclische, niedermolekulare Teilkondensate (Polyorganosiloxane) mit einem Kondensationsgrad von z.B. etwa 2 bis 100, insbesondere etwa 2 bis 6. Entsprechendes gilt für die Aluminiumkomponente (b) und die Komponente (c). Gegebenenfalls kann auch ein Oligomeres eingesetzt werden, das voneinander verschiedene Zentralatome aufweist.

Als Komponente (c) werden im Reaktionsmedium lösliche, schwerflüchtige Oxide oder derartige schwerflüchtige Oxide bildende Verbindungen von Elementen der Hauptgruppen Ia bis Va oder der Nebengruppen IIb, IIIb, Vb bis VIIIb des Periodensystems mit Ausnahme von Al eingesetzt. Vorzugsweise leitet sich die Komponente (c) von folgenden Elementen ab: Erdalkalimetalle, wie Mg und Ca, B, Si, Sn, Pb, P, As, Sb, Bi, Cr, Mo, W, Mn, Fe, Co, Ni, Zn und/oder V, wobei B, Si, Sn, Zn und P besonders bevorzugt sind. Auch die Lanthaniden und Actiniden können gegebenenfalls eingesetzt werden.

Unter den schwerflüchtigen Oxiden sind $B_2O_3$, $P_2O_5$ und $SnO_2$ besonders bevorzugt.

Im Reaktionsmedium lösliche, schwerflüchtige Oxide bildende Verbindungen sind z.B. anorganische Säuren, wie

Phosphorsäure und Borsäure, sowie deren Ester. Ferner eignen sich z.B. Halogenide, wie $SiCl_4$, $HSiCl_3$, $SnCl_4$ und $PCl_5$ und Alkoxide wie $Ca(OR)_2$, $Si(OR)_4$, $Sn(OR)_4$ und $VO(OR)_3$, wobei sich R von niederen Alkoholen, wie Methanol, Ethanol, Propanol oder Butanol ableitet. Weitere verwendbare Ausgangsverbindungen sind entsprechende Salze mit flüchtigen Säuren, z.B. Acetate, wie Siliciumtetraacetat, basische Acetate, wie basisches Bleiacetat und Formiate.

Vorzugsweise verwendet man zur Herstellung der erfindungsgemäßen Zusammensetzung 40 bis 90, insbesondere 40 bis 80, und besonders bevorzugt 70 bis 80 Mol-% der Komponente (A), 10 bis 40, insbesondere 10 bis 30, und besonders bevorzugt 15 bis 25 Mol-% der Komponente (B) und höchstens 50, insbesondere höchstens 40 Mol-% der Komponente (C).

Zur Herstellung des Lacks werden die Ausgangskomponenten im gewünschten Mischungsverhältnis mit einer geringeren Wassermenge als der zur vollständigen Hydrolyse aller eingesetzten hydrolysierbaren Gruppen stöchiometrisch erforderlichen Menge vorkondensiert. Diese unterstöchiometrische Wassermenge wird vorzugsweise so zudosiert, daß lokale Überkonzentrationen und dadurch verursachte Ausfällungen (von z.B. $Al_2O_3 . xH_2O$) vermieden werden. Dies kann z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80%igem Ethanol, oder Salzhydraten, z.B. $CaCl_2 . 6H_2O$, geschehen. Ein anderer Weg ist die Wasserzuführung durch ein System, das Komponenten enthält, die miteinander reagieren und dabei langsam Wasser freisetzen, wie dies z.B. bei der Esterbildung aus Alkohol und Säure der Fall ist (ccc = chemically controlled condensation).

Vorzugsweise erfolgt die Vorkondensation in Gegenwart eines Kondensationskatalysators. Gegebenenfalls, insbesondere dann, wenn eine der Komponenten (a) bis (c) stark unpolar ist (z.B. ein Silan mit R' = Aryl), kann ein mit Wasser zumindest teilweise mischbares organisches Lösungsmittel angewandt werden, z.B. ein aliphatischer Alkohol, wie Ethanol, Propanol, Isopropanol oder Butanol, ein Ether, wie Dimethoxyethan, ein Ester, wie Dimethylglykolacetat, oder ein Keton, wie Aceton oder Methylethylketon. n-Butanol wird als Lösungsmittel bevorzugt. Eventuell während der Vorkondensation zugesetztes oder gebildetes Lösungsmittel wird vorzugsweise nicht abgedampft, sondern das Reaktionsgemisch wird als solches zur Weiterkondensation eingesetzt.

Als Kondensationskatalysatoren eignen sich Protonen oder Hydroxylionen abspaltende Verbindungen und Amine. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 3 Mol/Liter betragen.

Besonders vorteilhaft ist es, wenn bereits eine der Reaktionskomponenten (a) bis (c) als Kondensationskatalysator wirkt. Hier sind insbesondere die Silane (a) zu nennen, die einen oder mehrere Reste R' aufweisen, die mit basischen Gruppen, z.B. $-NH_2$, substituiert sind. So haben sich z.B. Aminoalkylsilane für diese Zwecke sehr bewährt. Konkrete Beispiele für derartige Verbindungen sind γ-Aminopropylsilane, insbesondere y-Aminopropyltri(m)ethoxysilan. Die Verwendung derartiger Verbindungen als Reaktionskomponenten hat den zusätzlichen Vorteil, daß dadurch eine entscheidende Verbesserung der Haftung der Zusammensetzung auf verschiedenen Substraten, z.B. Kunststoff, Metall, Glas und gleichzeitig eine deutliche Steigerung der Kratz- und Abriebfestigkeit beobachtet werden kann. Derartige als Kondensationskatalysator wirkende Reaktionskomponenten können entweder alleine oder in Kombination mit den üblichen, oben erwähnten Kondensationskatalysatoren verwendet werden.

Die Vorkondensation wird üblicherweise bei Temperaturen von -20 bis 100°C, vorzugsweise bei 0 bis 30°C durchgeführt. Bei Verwendung eines organischen Lösungsmittels kann die Vorkondensation auch bei Temperaturen bis zur Siedetemperatur des Lösungsmittel erfolgen, wird jedoch auch hier vorzugsweise bei 0 bis 30°C durchgeführt.

Gegebenenfalls kann man zunächst eine oder mehrere Ausgangskomponenten oder einen Teil einer, mehrerer oder aller Ausgangskomponenten vorkondensieren, dann die restlichen Ausgangskomponenten zumischen und anschließend nach dem Verfahren der Vorkondensation oder Weiterkondensation cokondensieren.

Die anschließende hydrolytische Weiterkondensation des Vorkondensats erfolgt in Gegenwart von weiterem Wasser, das ganz oder teilweise, z.B. zu mindestens 80 %, insbesondere mindestens 90 %, die Hydrolyse der noch verbliebenen hydrolysierbaren Gruppen bewirkt. Bevorzugt wird ein Wasserüberschuß, bezogen auf die noch vorhandenen hydrolysierbaren Gruppen, eingesetzt. In einer aus praktischen Gründen bevorzugten Ausführungsform wird zur Weiterkondensation die Wassermenge eingesetzt, die zur vollständigen Hydrolyse der ursprünglich eingesetzten Ausgangskomponenten stöchiometrisch erforderlich wäre (das bereits eingesetzte Wasser bleibt dabei also unberücksichtigt).

Um Ausfällungen so weit wie möglich zu vermeiden, wird es besonders bevorzugt, die Wasserzugabe in mehreren Stufen, z.B. in drei Stufen, durchzuführen. Dabei wird in der ersten Stufe z.B. 1/10 bis 1/20 der zur Hydrolyse stöchiometrisch benötigten Wassermenge zugegeben. Nach kurzem Rühren folgt die Zugabe von 1/5 bis 1/10 der stöchiometrischen Wassermenge und nach weiterem kurzen Rühren wird schließlich eine stöchiometrische Wassermenge zugegeben, so daß am Schluß ein leichter Wasserüberschuß vorliegt.

Die Weiterkondensation erfolgt vorzugsweise in Gegenwart eines der vorstehend genannten Kondensationskatalysatoren, wobei ebenfalls flüchtige Verbindungen und Reaktionskomponenten (a) bevorzugt sind. Die Gesamt-Katalysatorkonzentration kann z.B. bis zu 5 Mol/Liter betragen.

Bei der Weiterkondensation kann gegebenenfalls auch eines der vorstehend genannten organischen Lösungsmittel anwesend sein oder zugesetzt werden, wobei während der Vor- und Weiterkondensation gebildetes Lösungsmittel oder zur Vor- oder Weiterkondensation eventuell zugesetztes Lösungsmittel nach beendeter Weiterkondensation vorzugsweise nicht abgedampft wird.

Das Vorkondensat reagiert aufgrund seiner Hydrolyseempfindlichkeit mit Wasserdampf und kann daher auch in einer wasserdampfhaltigen Atmosphäre weiter-kondensiert werden. In diesem Fall kann ganz oder teilweise auf die Zugabe von weiterem Wasser zum Kondensat verzichtet werden.

Die Weiterkondensation erfolgt gewöhnlich bei Temperaturen von -20 bis 100°C, vorzugsweise 0 bis 30°C.

Überraschenderweise hat sich gezeigt, daß beim Erhitzen der erhaltenen Zusammensetzung auf 40 bis 80°C ohne Abdampfen des Lösungsmittels eine Stabilisierung ihrer Viskosität erzielt wird, d.h. die Viskosität bleibt nach erfolgter Polykondensation über längere Zeit im wesentlichen konstant.

Die Zusammensetzung ist nach Vorkondensieren bzw. nach dem Weiterkondensieren als solche verwendungsfähig. Gegebenenfalls können jedoch übliche Additive zugesetzt werden, z.B. organische Verdünnungsmittel, Verlaufmittel, Färbemittel (Farbstoffe oder Pigmente), UV-Stabilisatoren, Füllstoffe, Viskositätsregler, Gleitmittel, Netzmittel, Antiabsetzmittel oder Oxidationsinhibitoren.

Die Verarbeitung der Zusammensetzung muß innerhalb einer bestimmten Topfzeit erfolgen. Diese Topfzeit hängt stark von der Art und Menge der verwendeten Komponenten (a) bis (c) ab und kann z.B. 1 Tag, aber auch eine Woche oder sogar länger betragen.

Für Beschichtungszwecke werden übliche Beschichtungsverfahren angewandt, z.B. das Tauchen, Fluten, Gießen, Schleudern, Spritzen oder Aufstreichen.

Die Beschichtung wird in Schichtdicken von z.B. 2 bis 200 µm, vorzugsweise 2 bis 30 µm und insbesondere 5 bis 15 µm aufgetragen. Gegebenenfalls kann das Substrat vor Aufbringen der erfindungsgemäßen Beschichtung mit einer Haftvermittler- oder Primerschicht grundiert werden.

Die Aushärtung der Lacke erfolgt erfindungsgemäß bei Temperaturen oberhalb 135°C, vorzugsweise oberhalb 150°C.

**Beispiele**

3 mm dicke Platten (12 x 5 cm) aus handelsüblichen Polycarbonaten (Copolycarbonate auf Basis des Diphenols Ib und des Bisphenol A Apec HT KU 1-9350 mit Tg = 185°C der Fa. Bayer bzw. zum Vergleich ein Polycarbonat auf Basis Bisphenol A: Makrolon 3108 mit Tg = 148°C der Fa. Bayer) wurden mit Isopropanol gereinigt und durch Tauchen in dem erfindungsgemäßen Kratzfestlack (Ormocer des ISC Würzburg der Fraunhofergesellschaft nach EP 0 358 011 A2) bei einer Tauchgeschwindigkeit v = 100 $cm^{-1}$ eine Lackschicht von 20 µm aufgebracht. Nach 10 Minuten Ablüften bei Raumtemperatur wurden die beschichteten Platten bei erhöhten Temperaturen getrocknet. Dabei wurden Trocknungszeiten und Trocknungstemperatur variiert. Die Schichtdicke des Kratzfestlackes betrug nach Trocknung 5 µm.

Die beschichteten Platten wurden nach erfolgter Aushärtung 2 Tage bei Raumtemperatur gelagert und sodann der Taber-Abriebmethode (ASTM D 1044) unterworfen. Die Ergebnisse der Prüfungen sind aus Tabelle 1 ersichtlich.

Taber-Abriebmethode (ASTM D 1044)

Das Prüfgerät besteht aus einem horizontal angeordneten Teller, auf den der Probekörper aufgespannt wird. Der Teller wird mit einer Drehzahl von 55 ± 6 Umdrehungen/Minute angetrieben. Zwei zylindrische Abriebkörper (CS-10.F) sind vertikal und drehbar so angeordnet, daß sie auf die Oberfläche des Probekörpers unter einer Belastung von je 1000 g schleifend einwirken.

Die Trübung, verursacht durch den Abrieb, wird in einer Photometerkugel nach ASTM 1003 gemessen. Die Trübung wird an zwei Proben im Anlieferungszustand und nach Umdrehungen gemessen. Die Trübungszunahme (Differenz zwischen Endtrübung und Trübung im Anlieferungszustand) wird angegeben.

Ergebnisse

Kratzfestbeschichtungen Einfluß der Härtungstemperatur und -zeit bei BTMC-BPA-Copolycarbonatplatten

| Härtungstemperatur (°C) | Härtungszeit (min) | Plattenmaterial | Taber-Abraser (Test 4) 1000 g Belastung Schleifrolle CS 10 Eintrübung nach | |
|---|---|---|---|---|
| | | | 500 n | 1000n |
| 135 | 10 | A | 11,4 | 19,0 |
| 150 | 10 | A | 5,5 | 11,5 |
| 170 | 10 | A | 5,3 | 11,3 |
| 150 | 10 | A | 5,5 | 11,5 |
| 150 | 20 | A | 5,3 | 11,5 |
| 150 | 30 | A | 5,2 | 11,4 |
| 150 | 45 | A | 5,2 | 11,4 |
| Vergleich: | | | | |
| 130 | 10 | C | 14,2 | 33,0 |
| 130 | 45 | C | 10,1 | 17,9 |
| 130 | 45 | A | 9,3 | 15,4 |

BP TMC = 1,1-Bis-(4-hydroxyphenyl)-3,3,5-trimethylcyclohexan
BPA = 2,2-Bis-(4-hydroxyphenyl)-propan
A = BP-TMC/BPA-Copolycarbonat
Tg = 185°C, Apec HT KU 1-9350 der Fa. Bayer
C = BPA-Polycarbonat
Tg = 148°C Makrolon 3108 der Fa. Bayer

**Patentansprüche**

1. Verfahren zur Beschichtung von Polycarbonatformteilen, dadurch gekennzeichnet, daß man auf die Oberfläche eines Formkörpers aus einem Polycarbonat auf Basis eines Diphenols der Formel (Ia)

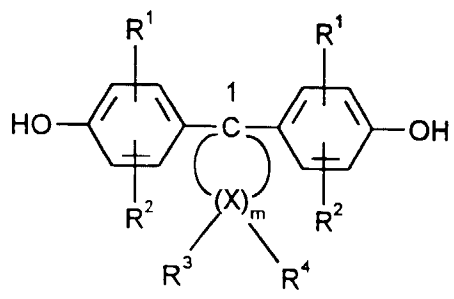

(Ia)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,.

m 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten,
eine Masse (b) in eine Dicke von 2 bis 200 µm aufträgt, die durch hydrolytische Polykondensation einer Aluminiumverbindung eines organofunktionellen Silans und einer Oxidkomponente erhalten worden ist, und die Masse bei einer Temperatur von 135 bis 180°C härtet.

2. Polycarbonatformkörper aus hochmolekularen thermoplastischen aromatischen Polycarbonaten mit Molekulargewichten $\overline{M}w$ (Gewichtsmittel) von mindestens 10.000, vorzugsweise von 20.000 bis 300.000, die bifunktionelle Carbonatstruktureinheiten der Formel (I) enthalten

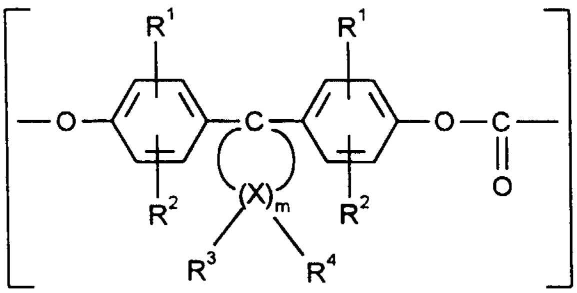

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten, einer Schicht (b) mit einer Dicke von 2 bis 200 µm, die durch hydrolytische Polykondensation einer Aluminiumverbindung eines organofunktionellen Silans und einer Oxidkomponente erhalten worden ist.

## Claims

1. Method for coating polycarbonate moulded parts, characterised in that, to the surface of a moulded body composed of a polycarbonate based on a diphenol corresponding to formula (Ia)

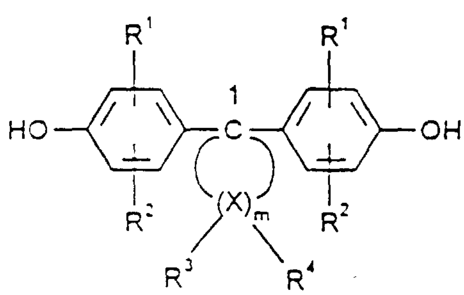

(Ia)

wherein

| | |
|---|---|
| $R^1$ and $R^2$ | independently of one another denote hydrogen, halogen, preferably chlorine or bromine, $C_1$-$C_8$ alkyl, $C_5$-$C_6$ cycloalkyl, $C_6$-$C_{10}$ aryl, preferably phenyl, and $C_7$-$C_{12}$ aralkyl, preferably phenyl-$C_1$-$C_4$ alkyl, in particular benzyl, |
| m | denotes 4 or 5, |

$R^3$ and $R^4$ are individually selectable for each X and independently of one another denote hydrogen or $C_1$-$C_6$ alkyl and

X denotes carbon,

with the proviso that, on at least one atom X, $R^3$ and $R^4$ simultaneously denote alkyl,
a composition (b), which has been obtained by hydrolytic polycondensation of an aluminium compound of an organofunctional silane and an oxide component, is applied in a thickness of from 2 to 200 µm and the composition is cured at a temperature of from 135 to 180°C.

2. Polycarbonate moulded bodies composed of high-molecular, thermoplastic, aromatic polycarbonates having molecular weights $\overline{M}_w$ (weight average) of at least 10,000, preferably of from 20,000 to 300,000, which contain the bifunctional carbonate structural units corresponding to formula (I)

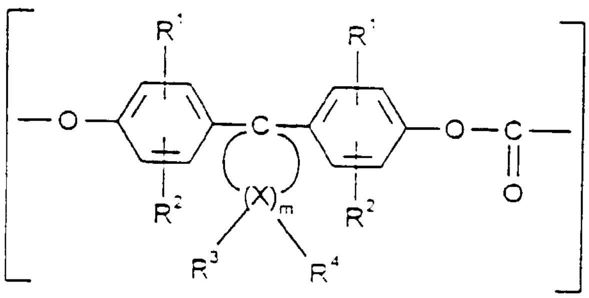

(I),

wherein

$R^1$ and $R^2$ independently of one another denote hydrogen, halogen, preferably chlorine or bromine, $C_1$-$C_8$ alkyl, $C_5$-$C_6$ cycloalkyl, $C_6$-$C_{10}$ aryl, preferably phenyl, and $C_7$-$C_{12}$ aralkyl, preferably phenyl-$C_1$-$C_4$ alkyl, in particular benzyl,

m denotes 4 or 5,

$R^3$ and $R^4$ are individually selectable for each X and independently of one another denote hydrogen or $C_1$-$C_6$ alkyl and

X denotes carbon,

with the proviso that, on at least one atom X, $R^3$ and $R^4$ simultaneously denote alkyl, and a layer (b) having a thickness of from 2 to 200 µm, which has been obtained by hydrolytic polycondensation of an aluminium compound of an organofunctional silane and an oxide component.

## Revendications

1. Procédé de revêtement de pièces moulées en polycarbonate, caractérisé en ce que sur la surface d'un corps moulé en un polycarbonate à base d'un diphénol de formule (Ia)

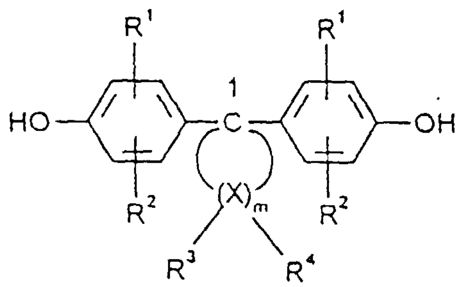

(Ia)

dans laquelle

$R^1$ et $R^2$ représentent, indépendamment l'un de l'autre, l'hydrogène, un halogène, de préférence le chlore ou le brome, un alkyle en $C_1$ à $C_8$, un cycloalkyle en $C_5$ à $C_6$, un aryle en $C_6$ à $C_{10}$, de préférence le phényle, et un aralkyle en $C_7$ à $C_{12}$, de préférence un phényl(alkyle en $C_1$ à $C_4$), en particulier le benzyle,

m représente 4 ou 5,

$R^3$ et $R^4$ représentent indépendamment l'un de l'autre et au choix pour chaque X individuel l'hydrogène ou un alkyle en $C_1$ et $C_6$, et

X représente le carbone,

avec la condition que sur au moins un atome X, $R^3$ et $R^4$ représentent simultanément un alkyle,
on applique une pâte (b) à une épaisseur de 2 à 200 µm, qui a été obtenue par polycondensation hydrolytique d'un composé aluminium d'un organosilane fonctionnel et d'un composant oxyde, et la pâte est durcie à une température de 135 à 180° C.

**2.** Corps moulés en polycarbonate aromatique thermoplastique à haute masse moléculaire, dont la masse moléculaire Mw (moyenne pondérale) vaut au moins 10.000, et de préférence 20.000 à 300.000, qui contiennent comme unités structurelles des carbonates bifonctionnels de formule (I)

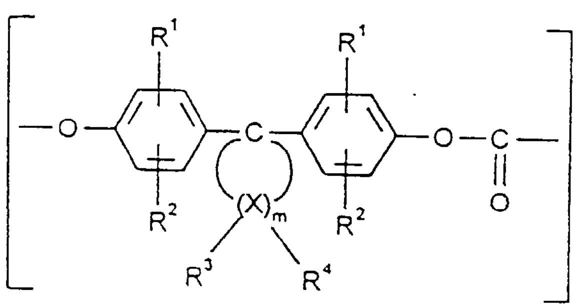

(I),

dans laquelle

$R^1$ et $R^2$ représentent, indépendamment l'un de l'autre, l'hydrogène, un halogène, de préférence le chrome ou le brome, un alkyle en $C_1$ à $C_8$, un cycloalkyle en $C_5$ à $C_6$, un aryle en $C_6$ à $C_{10}$, de préférence le phényle, et un aralkyle en $C_7$ à $C_{12}$, de préférence un phényl(alkyle en $C_1$ à $C_4$), en particulier le benzyle,

m vaut 4 ou 5,

$R^3$ et $R^4$ représentent, indépendamment l'un de l'autre, l'hydrogène ou un alkyle en $C_1$ à $C_6$, choisis individuellement pour chaque X, et

X représente le carbone,

avec la condition que sur au moins un atome de X, $R^3$ et $R^4$ représentent simultanément un alkyle, pourvus d'une couche (b) à une épaisseur de 2 à 200 µm , qui a été obtenue par polycondensation hydrolytique d'un composé aluminium d'un organosilane fonctionnel et d'un composant oxyde.